# FASCICULE DE BREVET EUROPEEN

(11) **EP 1 461 527 B1**
(45) Date de publication et mention de la délivrance du brevet: **02.01.2008**
(21) Numéro de dépôt: 02799110.8
(22) Date de dépôt: 23.12.2002
(51) Int. Cl.: F02N 11/04, G01D 5/242

(54) **PROCEDE DE DETECTION DE LA POSITION ELECTRONIQUE DU ROTOR D'UNE MACHINE ELECTRIQUE**
VERFAHREN ZUM ROTORSPOSITIONDETEKTION EINES ELEKTRISCHEN APPARATES
METHOD AND DEVICE FOR DETECTING THE ELECTRICAL POSITION OF AN ELECTRICAL MACHINE ROTOR

(30) Priorité: 03.01.2002 FR 0200030
(43) Date de publication de la demande: 29.09.2004
(73) Titulaire: Valeo Systèmes de Contrôle Moteur, 95520 Osny (FR)
(72) Inventeur: GUILLARME, Nicolas, F-95630 Mériel (FR); SOREL, Stéphane, Claude, F-95610 Eragny sur Oise (FR)
(74) Mandataire: Rolland, Jean-Christophe
(86) Numéro de dépôt international: PCT/FR2002/004523
(87) Numéro de publication internationale: WO 2003/060317

(56) Documents cités:
- EP-A- 0 952 335
- US-A- 5 461 293

## Description

La présente invention concerne des perfectionnements apportés dans le domaine de la détection de la position électrique du rotor d'une machine électrique qui est accouplé en rotation sans glissement à un moteur à combustion interne équipé d'un capteur à roue dentée délivrant un signal représentatif de la position angulaire du moteur pour les vitesses de rotation supérieures à un premier seuil prédéterminé.

Par "machine électrique", on entend désigner une machine électrique tournante capable de fonctionner soit en générateur électrique si elle est entraînée par un moteur, soit en moteur électrique si elle est alimentée électriquement, et ses moyens de contrôle assurant son excitation convenable dans les deux modes de fonctionnement.

### ARRIERE-PLAN DE L'INVENTION

Le pilotage correct d'une machine électrique telle qu'un alterno-démarreur, notamment à réluctance variable, nécessite que soit connue avec précision la position électrique de son rotor. La connaissance de cette position est actuellement procurée par un dispositif de mesure de position mettant en oeuvre un capteur spécifique, par exemple à roue dentée, qui comporte un nombre de dents égal au nombre de pôles du rotor de la machine électrique pour fournir l'information requise sur toute la plage de vitesses de rotation couverte par le moteur (de la vitesse nulle à la vitesse maximale) et dans toutes les plages de variation des paramètres influents (température, tension du réseau de bord, ...) .

Toutefois ces dispositifs de mesure de position, qui sont performants et qui, en tant que tels, donnent toute satisfaction, sont complexes et coûteux. En outre ils sont montés en association physique avec le bloc moteur/transmission (notamment en bout de l'embrayage) en plus du capteur à roue dentée existant pour le contrôle du moteur. Bien que le volume du capteur spécifique ait pu être rendu très faible (il peut présenter typiquement une épaisseur de l'ordre de 6 mm), il n'en demeure pas moins qu'il constitue une gêne aussi bien pour le montage du bloc moteur/transmission dans un espace qui est compté que pour une opération de réglage et/ou de calibrage. Au surplus, les dispositifs ainsi montés sont trop exposés (chaleur du moteur, poussières, huile, ...), ce qui peut influencer défavorablement leurs conditions de fonctionnement et leur durée de vie.

Il existe donc une demande pressante pour des agencements de détection de la position du rotor d'une machine électrique qui soient moins coûteux que les dispositifs actuels et qui puissent être implantés ailleurs qu'aux emplacements de montage actuels, dans des endroits où la place disponible est moins comptée et surtout où ils seront moins exposés à des conditions défavorables.

Il faut remarquer ici que le capteur à roue dentée servant au contrôle moteur dont on peut extraire une valeur absolue de position angulaire du vilebrequin (capteur 60-2 dents dans le standard mondial) comporte un nombre de dents qui n'est pas égal au nombre de pôles du rotor de la machine électrique.

Ce capteur ne peut donc fournir une valeur fiable de la position angulaire du vilebrequin qu'au-dessus d'une valeur minimale de la vitesse de rotation, en pratique de l'ordre de 500 tours/minute.

Un tel capteur ne peut donc pas être utilisé pour fournir l'information recherchée de position angulaire du vilebrequin pour des vitesses allant de la vitesse nulle jusqu'à la vitesse minimum de fonctionnement correct du capteur.

Or, dans le cas précis d'un alterno-démarreur, la connaissance de la position angulaire du vilebrequin est nécessaire pour piloter l'alterno-démarreur lors du démarrage du moteur, c'est-à-dire pour les vitesses faibles à partir de la vitesse nulle.

### OBJET DE L'INVENTION

L'invention a donc pour but de proposer un procédé permettant de remédier de façon efficace aux inconvénients exposés plus haut, et permettant de connaître de façon fiable la position angulaire du rotor de la machine électrique sur toute la plage de fonctionnement du moteur à partir de la vitesse nulle, et cela dans des conditions techniques relativement simples et peu coûteuses, avec une implantation plus aisée que par le passé.

### BREVE DESCRIPTION DE L'INVENTION

A ces fins, selon un premier de ses aspects, il est proposé selon l'invention un procédé de détection de la position angulaire d'un rotor de machine électrique qui est accouplé en rotation sans glissement à un moteur à combustion interne équipé d'un capteur délivrant un premier signal représentatif de la position angulaire du moteur pour des vitesses de rotation supérieures à une vitesse minimale de mesure, procédé selon lequel :
- à partir d'au moins une caractéristique électrique de la machine électrique, on génère un second signal représentatif d'une position angulaire estimée du rotor de la machine électrique pour des vitesses de rotation inférieures à une vitesse maximale d'estimation,
- et, en fonction d'une vitesse de rotation estimée, on délivre à des moyens de contrôle de la machine électrique
   - le second signal lorsque la vitesse de rotation estimée est inférieure à un premier seuil supérieur ou égal à la vitesse minimale de mesure,
   - le premier signal lorsque la vitesse de rotation estimée est supérieure à un second seuil lui-même supérieur ou égal au premier seuil mais inférieur ou égal à la vitesse maximale d'estimation,
- et un basculement du second signal au premier signal, et vice versa, est effectué pour une vitesse de rotation estimée comprise entre le premier seuil et le second seuil.

Selon une version avantageuse de l'invention, lors d'une augmentation de la vitesse de rotation avec une délivrance du second signal, un basculement du second signal au premier signal est effectué lorsque la vitesse de rotation estimée atteint le second seuil, et lors d'une diminution de la vitesse de rotation et une délivrance du premier signal, un basculement du premier signal au second signal est effectué lorsque la vitesse de rotation estimée atteint le premier seuil. De préférence, le second seuil est inférieur ou égal à une vitesse de ralenti du moteur. Ainsi, lors d'un fonctionnement au ralenti du moteur à combustion, on évite un basculement inutile du premier signal au second signal sur toute la plage de fonctionnement normal du moteur, c'est-à-dire depuis la vitesse de ralenti jusqu'à la vitesse de rotation maximale du moteur.

Selon d'autres aspects de l'invention, pour provoquer la commutation d'un signal à l'autre, la vitesse de rotation estimée peut être déterminée soit à partir d'une caractéristique électrique de la machine électrique, soit par des moyens temporisateurs enclenchables lors de la mise en marche du moteur et commandant la commutation au bout d'un temps déterminé pour lequel la vitesse est supposée se situer entre le premier seuil et le second seuil.

De façon pratique, le premier seuil est par exemple d'environ 500 tours/minute et le second seuil est par exemple d'environ 700 tours/minute.

Grâce aux dispositions conformes à l'invention, on est en mesure de détecter la position angulaire du rotor sur toute sa plage de rotation (depuis la vitesse nulle) en mettant en oeuvre un capteur à roue dentée préexistant pour le fonctionnement du moteur à combustion et un estimateur de position limité aux basses vitesses qui, compte tenu de ses performances plus restreintes que celles des estimateurs de position angulaire antérieurs fonctionnant sur la totalité de la plage de vitesses du moteur, est d'une technique plus simple et donc d'un coût beaucoup plus réduit. Un tel estimateur de position peut être constitué sous forme d'un calculateur recevant en entrée les informations de tension et courant de la machine électrique et délivrant en sortie un signal représentatif de la position angulaire de son rotor, un tel calculateur pouvant être intégré dans le logiciel de contrôle du moteur électrique.

### BREVE DESCRIPTION DES DESSINS

L'invention sera mieux comprise à la lecture de la description détaillée qui suit dans laquelle on se réfère au dessin annexé sur lequel :
- les figures lA à 1D sont des graphiques illustrant le fondement du procédé conforme à l'invention ;
- la figure 2 est un schéma synoptique illustrant un mode de réalisation d'un dispositif constitué conformément à l'invention ; et
- la figure 3 est un schéma synoptique illustrant une variante du dispositif de la figure 2.

On se réfère tout d'abord aux figures lA à 1D pour expliquer le procédé conforme à l'invention.

### DESCRIPTION DETAILLEE DE L'INVENTION

A la figure lA est représentée en 1 la caractéristique couple/vitesse de rotation d'une machine électrique tel qu'un alterno-démarreur, notamment à réluctance variable, entre la vitesse nulle et la vitesse maximale de rotation.

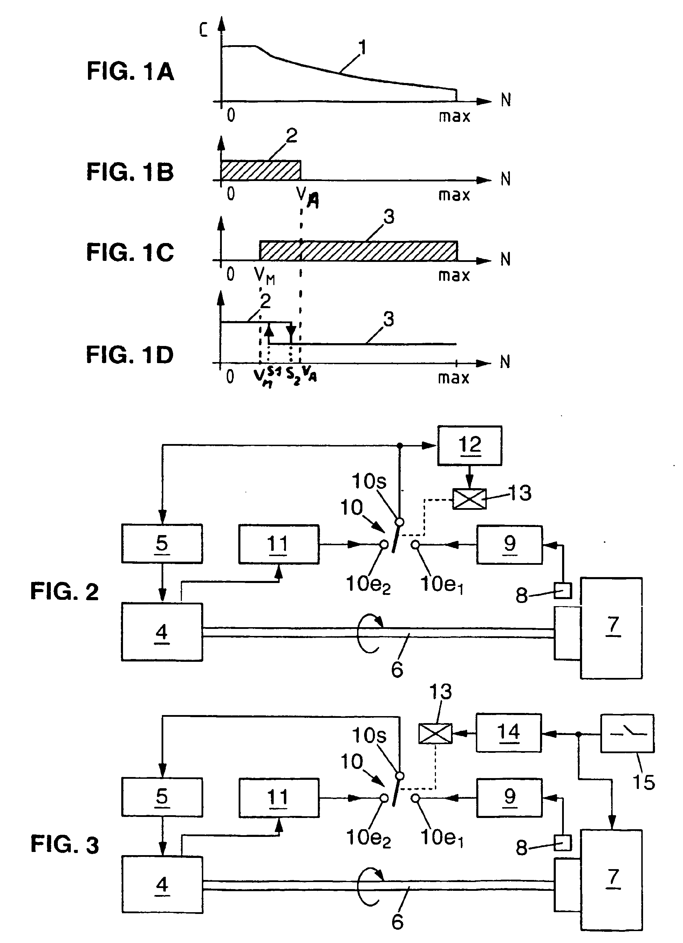

A la figure 1B est illustrée en 2 la plage de fonctionnement utile de moyens estimateurs de position angulaire du rotor de la machine électrique qui sont de conception simplifiée et qui sont efficaces dans le domaine des vitesses basses, entre la vitesse nulle et une vitesse maximale d'estimation vA (par exemple de l'ordre de 1000 tours/minute) au-delà de laquelle l'estimation de position est considérée comme n'étant plus fiable.

A la figure 1C est illustrée en 3 la plage de fonctionnement utile d'un capteur à roue dentée ou d'un capteur PMH présent dans un moteur à combustion interne pour permettre le contrôle de celui-ci. Un tel capteur délivre une valeur absolue de position angulaire du vilebrequin pour toute la plage de fonctionnement normal du moteur, entre sa vitesse de ralenti et sa vitesse maximale. En pratique, le capteur délivre une indication fiable pour des vitesses supérieures à une vitesse minimale de mesure v_{M} (par exemple 450 tours/minute) qui est inférieure à la vitesse de ralenti du moteur (par exemple d'environ 750 tours/minute) et qui est sensiblement inférieure également à la vitesse maximale d'estimation V_{A} des moyens estimateurs précités.

Comme illustré à la figure 1D, le procédé de l'invention consiste à utiliser un premier signal représentatif d'une position angulaire mesurée par le capteur à roue dentée lorsque la vitesse de rotation estimée est supérieure à la vitesse maximale d'estimation V_{A}, et un second signal représentatif d'une position angulaire estimée lorsque la vitesse de rotation estimée est inférieure à la vitesse minimale de mesure V_{M}, et à effectuer un basculement du premier au second signal, ou vice versa, dans un intervalle compris entre un premier seuil S1 qui est supérieur à la vitesse minimale de mesure V_{M}, et un second seuil S2 qui est supérieur ou égal au premier seuil S1 mais inférieur ou égal à la vitesse maximale d'estimation V_{A}.

Dans le mode de mise en oeuvre préféré illustré, le second signal est utilisé depuis une vitesse de rotation nulle jusqu'à ce que la vitesse de rotation atteigne le second seuil S2, tandis que dans le sens d'une diminution de la vitesse de rotation le premier signal est utilisé jusqu'à ce que la vitesse de rotation atteigne le premier seuil S1. En outre, le second seuil S2 est inférieur ou égal à la vitesse de ralenti du moteur à combustion interne. En pratique cela signifie que le second signal n'est utilisé que pour le démarrage du moteur tandis que le premier signal est toujours utilisé pendant le fonctionnement normal du moteur quelle que soit l'augmentation ou la diminution de la vitesse de rotation du moteur. Un basculement du premier signal au second signal n'est donc effectué que lors de l'arrêt du moteur afin de placer les moyens de contrôle dans un état favorable à un nouveau démarrage.

Pour la mise en oeuvre de ce procédé, on peut avoir recours à l'agencement illustré schématiquement à la figure 2. Dans cet exemple, on se référera plus spécifiquement, en tant que machine électrique, à un alterno-démarreur, notamment du type à réluctance variable, dont le rotor comporte seize pôles, application pour laquelle les dispositions de l'invention s'avèrent tout particulièrement intéressantes.

Un alterno-démarreur 4, piloté par des moyens de contrôle 5, est solidaire en rotation (par exemple via un arbre d'accouplement 6) d'un moteur à combustion interne 7 muni d'un capteur à roue dentée 8 servant à son contrôle. Après mise en forme dans un circuit 9, le signal de sortie du capteur 8, appelé premier signal, est appliqué à une borne d'entrée 10ₑ₁ d'un commutateur 10. La fiabilité du capteur à roue dentée 8 est vérifiée pour des vitesses de rotation supérieures à la vitesse minimale de mesure v_{M}.

Par ailleurs des moyens estimateurs de position angulaire 11 reçoivent des signaux électriques représentatifs des caractéristiques électriques - tension, courant - de l'alterno-démarreur 4. Ces moyens estimateurs de position angulaire 11 élaborent, à partir desdits signaux d'entrée (tension, courant), un signal de sortie, appelé second signal, représentatif de la position angulaire du rotor de l'alterno-démarreur. Le second signal est appliqué à une autre entrée 10ₑ₂ du commutateur 10. Les moyens estimateurs de position 11 sont d'un type simplifié dont la fiabilité n'est vérifiée que pour des vitesses inférieures à la vitesse maximale d'estimation V_{A}. Les moyens estimateurs de position peuvent être constitués sous forme d'un calculateur de structure simple pouvant éventuellement être incorporé dans le logiciel de contrôle du moteur.

Le commutateur 10 possède une borne de sortie 10ₛ qui est raccordée à une entrée des moyens de contrôle 5 de l'alterno-démarreur 4.

La borne de sortie 10ₛ est également raccordée à des moyens générateurs d'un signal représentatif d'une valeur estimée de la vitesse, dont la sortie est connectée à un organe 13 d'actionnement du contact mobile du commutateur 10. Dans cet exemple, ces moyens estimateurs de vitesse 12 peuvent se présenter sous forme d'un calculateur donnant la vitesse estimée à partir des informations de rotation (durée d'un tour par exemple) déterminées à partir d'une caractéristique électrique de l'alterno-démarreur 4.

Grâce à cet agencement, les moyens estimateurs de vitesse 12 sont propres à détecter le moment opportun pour actionner le commutateur 10, de telle sorte que :
- Lorsqu'à partir d'une vitesse nulle la vitesse de rotation est inférieure au second seuil S2 précité, le contact mobile coopère avec la borne d'entrée 10ₑ₂ et c'est l'estimateur de position 11 qui fournit le signal de position angulaire du rotor qui est appliqué aux moyens de contrôle 5 de l'alterno-démarreur ;
- lorsque la vitesse de rotation devient supérieure au second seuil S2 précité , le contact mobile coopère avec la borne d'entrée 10ₑ₁ du commutateur 10 et c'est le signal émis par le capteur à roue dentée 8 qui est appliqué aux moyens de contrôle 5 de l'alterno-démarreur.

Compte tenu des valeurs respectives relativement éloignées des seuils S1 et S2 (par exemple S1 = 500 t/mn ; S2 = 700 t/mn), les moyens estimateurs de vitesse 12 n'ont pas à être d'une très grande précision et peuvent donc être réalisés de façon simple et économique.

Pour ce qui concerne la commande du commutateur 10, on peut envisager, en variante, qu'elle soit assujettie non pas à la vitesse directement estimée à partir d'une caractéristique électrique de l'alterno-démarreur, mais à partir d'un autre paramètre, tel que par exemple le temps : en effet, l'actionnement du commutateur 10 doit intervenir entre les vitesses S1 et S2, c'est-à-dire pour une vitesse en général inférieure à la vitesse de ralenti du moteur ; autrement dit la commutation doit intervenir pendant la phase de démarrage du moteur, alors que celui-ci passe de la vitesse nulle à sa vitesse de ralenti. Si l'on estime que cette phase de démarrage a une durée toujours approximativement identique, il est possible de considérer que le moteur atteindra une vitesse comprise entre S1 et S2 au bout d'un laps de temps prédéterminable à partir de la mise en marche du moteur.

Le dispositif illustré à la figure 3 est basé sur cette considération et met en oeuvre, en lieu et place des moyens estimateurs de vitesse 12 du dispositif de la figure 2, des moyens temporisateurs 14 déclenchés, en même temps que la mise en marche du moteur 7, par le circuit de contact 15. De tels moyens temporisateurs 14 peuvent être réalisés à moindre frais que les moyens estimateurs de vitesse 12. La temporisation joue alors le rôle du seuil S2 et le seuil S1 est supprimé. Dans ce cas, les moyens temporisateurs sont réinitialisés lors d'un arrêt du moteur afin de permettre la mise en oeuvre d'une nouvelle temporisation lors du démarrage suivant.

On notera en outre que les moyens estimateurs de position du rotor 11 peuvent prendre en compte non seulement les données électriques - tension, courant - de la machine électrique, mais également d'autres paramètres tels que notamment la température, de manière à fournir en sortie des informations compensées en température ou en fonction d'autres paramètres.

Bien entendu l'invention n'est pas limitée aux modes de réalisation décrits et on peut y apporter les variantes de réalisation sans sortir du cadre de l'invention tel que défini par les revendications.

En particulier les seuils S1 et S2 peuvent être respectivement confondus avec les vitesses V_{M} et V_{A}. Les seuils S1 et S2 peuvent au contraire être confondus l'un avec l'autre et être en un point quelconque de l'intervalle entre V_{M} et V_{A}.

## Revendications

1. Procédé de détection d'une position angulaire d'un rotor de machine électrique (4) qui est accouplé en rotation sans glissement à un moteur à combustion interne (7) équipé d'un capteur (8) délivrant un premier signal représentatif d'une position angulaire du moteur pour des vitesses de rotation supérieures à une vitesse minimale de mesure (v_{M}),
**caractérisé**
- **en ce qu'**à partir d'au moins une caractéristique électriques de la machine électrique, on génère un second signal représentatif d'une position angulaire estimée du rotor de la machine électrique pour des vitesses de rotation inférieures à une vitesse maximale d'estimation (v_{A}), cette vitesse d'estimation étant égale ou supérieure à la vitesse minimale de mesure (v_{M}),
- **en ce qu'**en fonction d'une vitesse de rotation estimée, on délivre à des moyens de contrôle de la machine électrique :
• le second signal lorsque la vitesse de rotation estimée est inférieure à un premier seuil (S1) supérieur ou égal à la vitesse minimale de mesure (v_{M}),
• le premier signal lorsque la vitesse de rotation estimée est supérieure à un second seuil (S2) supérieur ou égal au premier seuil mais inférieur ou égal à la vitesse maximale d'estimation (V_{A}).
et **en ce qu'**un basculement du second signal au premier signal, et vice versa, est effectué pour une vitesse de rotation estimée comprise entre le premier seuil et le second seuil.

2. Procédé selon la revendication 1, **caractérisé en ce que** lors d'une augmentation de la vitesse de rotation avec une délivrance du second signal, un basculement du second signal au premier signal est effectué lorsque la vitesse de rotation estimée atteint le second seuil, et **en ce que**, lors d'une diminution de la vitesse de rotation et une délivrance du premier signal, un basculement du premier signal au second signal est effectué lorsque la vitesse de rotation estimée atteint le premier seuil.

3. Procédé selon la revendication 2, **caractérisé en ce que** le second seuil (S2) est inférieur à une vitesse de ralenti du moteur à combustion interne.

4. Procédé selon la revendication 1, **caractérisé en ce que** la vitesse de rotation estimée est déterminée à partir d'au moins une caractéristique électrique de la machine électrique.

5. Procédé selon la revendication 1, **caractérisé en ce que** la vitesse de rotation estimée est déterminée par des moyens temporisateurs (14) enclenchables lors de la mise en marche du moteur (15).

6. Procédé selon la revendication 1, **caractérisé en ce que** le premier seuil (S1) est égal à 500 tours/minute et le second seuil (S2) est égal à 700 tours/minute.

## Claims

1. Method for detecting an angular position of an electric machine rotor (4) which is coupled in rotation without slippage to an internal combustion engine (7) equipped with a sensor (8) delivering a first signal representative of an angular position of the motor for rotation speeds greater than a minimum measurement speed (v_{M}), **characterized**
- **in that** a second signal representative of an estimated angular position of the rotor of the electric machine for rotation speeds less than a maximum estimation speed (v_{A}) is generated on the basis of at least one electrical characteristic of the electric machine, this estimation speed being equal to or greater than the minimum measurement speed (v_{M}),
- **in that** as a function of an estimated rotation speed, the following are delivered to control means of the electric machine:
• the second signal when the estimated rotation speed is less than a first threshold (S1) greater than or equal to the minimum measurement speed (v_{M}),
• the first signal when the estimated rotation speed is greater than a second threshold (s2) greater than or equal to the first threshold but less than or equal to the maximum estimation speed (v_{A}),
and **in that** a toggling from the second signal to the first signal, and vice versa, is performed for an estimated rotation speed lying between the first threshold and the second threshold.

2. Method according to Claim 1, **characterized in that** upon an increase in the rotation speed with a delivery of the second signal, a toggling from the second signal to the first signal is performed when the estimated rotation speed reaches the second threshold, and **in that**, upon a decrease in the rotation speed and a delivery of the first signal, a toggling from the first signal to the second signal is performed when the estimated rotation speed reaches the first threshold.

3. Method according to Claim 2, **characterized in that** the second threshold (S2) is less than an idle speed of the internal combustion engine.

4. Method according to Claim 1, **characterized in that** the estimated rotation speed is determined on the basis of at least one electrical characteristic of the electric machine.

5. Method according to Claim 1, **characterized in that** the estimated rotation speed is determined by timer means (14) that can be set going when the engine (15) is turned on.

6. Method according to Claim 1, **characterized in that** the first threshold (S1) is equal to 500 revolutions/minute and the second threshold (S2) is equal to 700 revolutions/minute.

## Patentansprüche

1. Verfahren zur Erfassung einer Winkelposition eines Rotors einer elektrischen Maschine (4), der in Drehung schlupffrei mit einem Verbrennungsmotor (7) gekoppelt ist, der mit einem Sensor (8) ausgestattet ist, der ein erstes Signal liefert, das für eine Winkelposition des Motors bei Drehgeschwindigkeiten über einer Mindestmessgeschwindigkeit (V_{M}) repräsentativ ist, **gekennzeichnet dadurch,**
- **dass** ausgehend von mindestens einer elektrischen Eigenschaft der elektrischen Maschine ein zweites Signal erzeugt wird, das für eine geschätzte Winkelposition des Rotors der elektrischen Maschine bei Drehgeschwindigkeiten unter einer maximalen Schätzgeschwindigkeit (V_{A}) repräsentativ ist, wobei diese Schätzgeschwindigkeit gleich der oder höher als die Mindestmessgeschwindigkeit (V_{M}) ist,
- **dass** in Abhängigkeit von einer geschätzten Drehgeschwindigkeit an Überwachungsmittel der elektrischen Maschine geliefert wird:
• das zweite Signal, wenn die geschätzte Drehgeschwindigkeit unter einem ersten Schwellwert (S1) liegt, der höher als die oder gleich der Mindestmessgeschwindigkeit (V_{M}) ist,
• das erste Signal, wenn die geschätzte Drehgeschwindigkeit über einem zweiten Schwellwert (S2) liegt, der höher als der oder gleich dem ersten Schwellwert, aber niedriger als die oder gleich der maximalen Schätzgeschwindigkeit (V_{A}) ist,
und **dass** ein Umschalten vom zweiten zum ersten Signal und umgekehrt bei einer geschätzten Drehgeschwindigkeit durchgeführt wird, die zwischen dem ersten und dem zweiten Schwellwert liegt.

2. Verfahren nach Anspruch 1, **dadurch gekennzeichnet, dass** bei einer Erhöhung der Drehgeschwindigkeit mit einer Lieferung des zweiten Signals ein Umschalten vom zweiten Signal zum ersten Signal durchgeführt wird, wenn die geschätzte Drehgeschwindigkeit den zweiten Schwellwert erreicht, und dass bei einer Verringerung der Drehgeschwindigkeit und einer Lieferung des ersten Signals ein Umschalten vom ersten Signal zum zweiten Signal durchgeführt wird, wenn die geschätzte Drehgeschwindigkeit den ersten Schwellwert erreicht.

3. Verfahren nach Anspruch 2, **dadurch gekennzeichnet, dass** der zweite Schwellwert (S2) unter einer Leerlaufgeschwindigkeit des Verbrennungsmotors liegt.

4. Verfahren nach Anspruch 1, **dadurch gekennzeichnet, dass** die geschätzte Drehgeschwindigkeit ausgehend von mindestens einer elektrischen Eigenschaft der elektrischen Maschine bestimmt wird.

5. Verfahren nach Anspruch 1, **dadurch gekennzeichnet, dass** die geschätzte Drehgeschwindigkeit von Verzögerungsmitteln (14) bestimmt wird, die beim Ingangsetzen (15) des Motors eingeschaltet werden können.

6. Verfahren nach Anspruch 1, **dadurch gekennzeichnet, dass** der erste Schwellwert (S1) gleich 500 Umdrehungen/Minute und der zweite Schwellwert (S2) gleich 700 Umdrehungen/Minute ist.
